# EUROPEAN PATENT SPECIFICATION

(11) **EP 3 574 721 B1**
(45) Date of publication and mention of the grant of the patent: **07.04.2021**
(21) Application number: 17711018.6
(22) Date of filing: 27.01.2017
(51) Int. Cl.: H05K 1/02, G06F 21/87, H01L 23/00

(54) **AN ELECTRONIC SENSITIVE ZONE PROTECTION SYSTEM**
SCHUTZSYSTEM FÜR ELEKTRONISCHE SENSIBLE ZONE
SYSTÈME DE PROTECTION DE ZONE SENSIBLE ÉLECTRONIQUE

(43) Date of publication of application: 04.12.2019
(73) Proprietor: Aselsan Elektronik Sanayi ve Ticaret Anonim Sirketi, 06370 Ankara (TR)
(72) Inventor: AYDIN, Mehmet Cengiz, Yenimahalle 06378 Ankara (TR); COLAK, Mehmet, 06370 Yenimahalle/Ankara (TR); KALAYCI, Sefa, 06370 Yenimahalle/Ankara (TR)
(74) Representative: Yamankaradeniz, Kemal
(86) International application number: PCT/TR2017/050042
(87) International publication number: WO 2018/139978

(56) References cited:
- US-A1- 2005 050 507
- US-A1- 2007 018 334
- US-A1- 2008 036 598
- US-A1- 2008 284 610
- PALEY STEVEN ET AL: "Active protection against PCB physical tampering", 2016 17TH INTERNATIONAL SYMPOSIUM ON QUALITY ELECTRONIC DESIGN (ISQED), IEEE, 15 March 2016 (2016-03-15), pages 356-361, XP032905071, ISSN: 1948-3295, DOI: 10.1109/ISQED.2016.7479227 [retrieved on 2016-05-25]

## Description

### Technical Field

Present invention is related to a protection system for detecting physical penetration to a sensitive zone.

### Prior Art

In order to protect sensitive information from unauthorized access, electronic protection systems are used. In conventional applications, said electronic protection systems comprise a security layer, a conduction layer on said security layer and a detection circuit that measures the resistance of said conduction layer. When an intruder tries to penetrate said security layer, an open circuit, a short circuit situation or an electrical resistance change occurs at the conduction layer. Therefore, by detecting the resistance change of the conduction layer, unauthorized access is able to be detected and counter security operations are able to be performed. However in the conventional applications, an intruder can detect the topology of said conduction layers by using an x-ray and can avoid touching the connection lines. Therefore, conventional applications are not able to protect said valuable assets.

Patent document US2003009683A1 discloses a tamper-evident/tamper-resistant electronic component system for preventing unauthorized access. Said system comprises an electromagnetic shield layer, a trip wire on said shield layer, a layer comprising a fractural pattern, another layer comprising another trip wire and an active electromagnetic marking layer emitting electromagnetic radiation. According to document US2003009683A1, trip wires on different layers are connected to each other. Therefore, when an intruder tries to penetrate said layers, by detecting the short circuit or open circuit situation of said trip wires, unauthorized access is able to be detected. However, according to document US2003009683A1, different layers are able to be split without harming the trip wires. Therefore, tamper-evident/tamper-resistant electronic component system of document US2003009683A1 cannot detect unauthorized access by splitting the layers.

US2007/018334A1 discloses a protection system for detecting physical penetration, comprising an electrical net and a detection circuit that is connected to the electrical net, wherein said electrical net comprises; - two neighboring conduction layers, each having only horizontal or only vertical connection lines that are electrically conductive, wherein said detection circuit that measures changing voltage of the three dimensional net and therefore able to detect penetration when one of the connection lines of a conduction layer and/or a connection element is damaged during a penetration situation, is connected to two connection lines of said conduction layers through their tips; - an insulation layer that is located between said conduction layers, wherein said insulation layer is dielectric and light proof; - several connection elements that electrically connect said conduction layers through said horizontal and vertical connection lines of different conduction layers; - the two neighboring conduction layers and the insulation layer form a web block; - the horizontal and vertical connection lines are placed so as to connect two connection elements; and - each connection element is directly connected to only one other connection element in each conduction layer. However, it proposes continuous connection lines laying side to side on both a top and a bottom layer and layer transition occurs on the sides of each long line near an edge of the protected area.

US2008/036598A1 discloses a protection system proposing a continuous connection serpentine on both a top and a bottom layer and layer transition occurs at the end of the serpentine near an edge of the protected area.

### Brief Description of the Invention

With present invention, a protection system for detecting physical penetration, is provided.

Said protection system is defined by the claims.

According to the present application, since a three dimensional net, having an arbitrary shape, is formed by conduction layers and connection elements, said net cannot be tracked by eye or x-ray imaging. Therefore, it is not possible to penetrate or split the insulation layers without damaging conduction layers and/or connection elements.

### Object of the Invention

The main object of the present invention is to provide a protection system for detecting physical penetration to a sensitive zone.

Another object of the present invention is to provide a protection system that is resilient to x-ray imaging.

Yet another object of the present invention is to provide a protection system, wherein splitting of the different layers is prevented.

### Description of Drawings

Figure 1 shows a block diagram of protection system of the present application.
Figure 2 shows a perspective view of electrical net of the protection system developed by the present application.
Figure 3 shows a top view of a web block of the present application.
Figure 4 shows a bottom view of a web block of the present application.
Figure 5 shows an x-ray image of the web block of the present application.
Figure 6 shows a top view of another web block of the present application.
Figure 7 shows a bottom view of said another web block of the present application.
Figure 8 shows an x-ray image of the said another web block of the present application.
Figure 9 shows an x-ray image of an electrical net of the present application that is formed by at least two web blocks.

| Protection system | (S) |
|---|---|
| Electrical net | (1) |
| Detection circuit | (2) |
| Insulation layer | (3) |
| Conduction layer | (4) |
| Connection element | (5) |
| Protection layer | (6) |
| Web block | (7) |
| Connection line | (8) |
| Tip | (9) |
| Dummy connection line | (10) |

### Detailed Description of the Invention

Electronic data security is provided by safe zones in various industries such as Information and Communication Technologies, Energy, Transport and Banking. Unauthorized access to the sensitive information inside the safe zone is prevented. In order to provide such safe zones, protection systems that detect the physical penetration are used. Said protection systems usually comprise plurality of layers that contain a conduction line. Although said protection systems are resilient to penetration, they are unable to detect splitting the layer. Therefore, according to the present invention, a protection system for detecting physical penetration to a sensitive zone is provided.

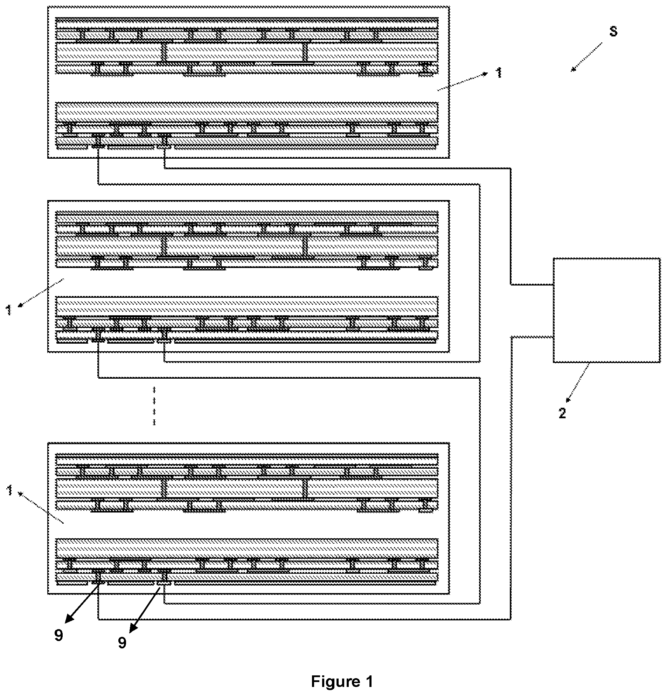

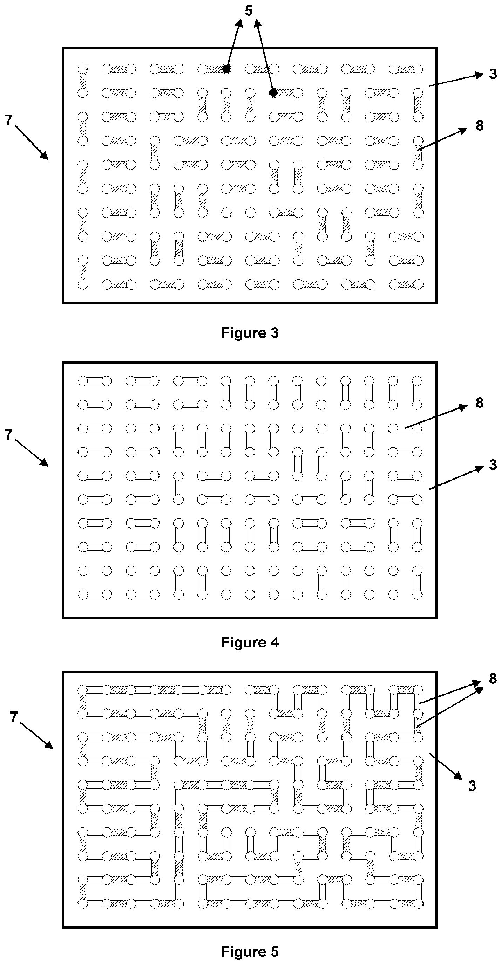

Exemplary embodiments of the protection system (S) of the present application are shown in figures 1-9. Said protection system (S) comprises at least one electrical net (1) and at least one detection circuit (2) that is connected to the electrical net (1). Said electrical net (1) comprises at least two conduction layers (4), each having horizontal and vertical connection lines (8) that are electrically conductive (said lines preferably in the form of copper wire), wherein said detection circuit (2) is connected to at least two connection lines (8) through their tips (9) of said conduction layers (4); at least one insulation layer (3) that are located between said conduction layers (4), wherein said insulation layer (3) is dielectric and light proof (opaque or non-transparent); at least three connection elements (5) that electrically connect said conduction layers (4) through said horizontal and vertical connection lines (8) of different conduction layers (4). Said detection circuit (2) is connected to connection lines (8) that are in connection with only one line. In other words, detection circuit (2) is connected to connection lines (8) having one free end. In an exemplary embodiment of the present application, said electrical net (1) forms at least one wall for a safe zone in order to detect physical penetration thereon. Said electrical net (1) comprises a plurality of conduction layers (4) and a plurality of insulation layers (3), wherein at least one insulation layer (3) is placed between each of said conduction layers (4) and each of said connection element (5) connects different conduction layers (4) by passing through at least one insulation layer (3). Since said insulation layers (3) are light proof, one conduction layers (4) are not able to be seen from other conduction layers (4). According to the present application, conduction layers (4) and connection elements (5) form at least one three dimensional net having an arbitrary shape. In order to form said arbitrary shape, at least three (preferably more) connection elements (5) are used. In the present invention, said J Z detection circuit (2) measures the resistance value of said three dimensional net. When a connection line (8) of a conduction layer (4) and/or a connection element (5) is damaged during a penetration situation, an open circuit or a short circuit occurs and resistance of the three dimensional net changes because of said damage. Therefore, said penetration is able to be detected and a protection method is performed (if any). Said connection elements (5) electrically connect neighboring conduction layers (4). For example, one connection element (5) connects a connection line (8) of a first conduction layer (4) with a connection line (8) of a second conduction layer (4), wherein another connection element (5) connects a connection line (8) of a third conduction layer (4) with a connection line (8) of a fourth conduction layer (4) and so on. Since insulation layers (3) are light proof and conduction layers (4) are not able to be seen, a potential intruder is unable to detect which connection element (5) connects which conduction layers (4). Therefore, said potential intruder is unable to track the three dimensional net formed by connection lines (8) of conduction layers (4) and connection elements (5). Since said three dimensional net cannot be followed, it is not possible to split said insulation layers (3) without damaging the conduction layers (4) and/or connection elements (5).

In a preferred embodiment of the present application, protection system (S) comprises at least one protection layer (6) that is placed on at least one outer conduction layer (4) (a conduction layer (4) that is not located between two insulation layers (3)). Said protection layer (6) protects the conduction layer (4) from environmental effects and forms electrical shield. Preferably, said protection layer (6) is light proof. Therefore, connection line (8) pattern of the conduction layer (4) covered by the protection layer (6) is not able to be seen.

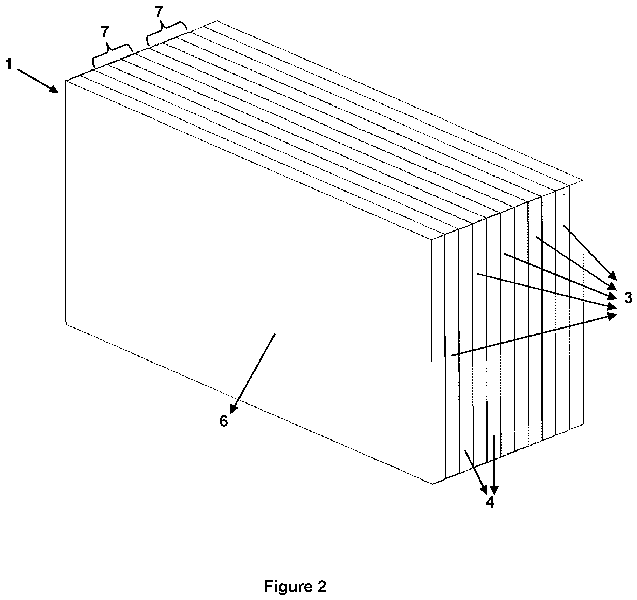

In the present invention, two neighbouring conduction layers (4) and one insulation layer (3), which is located between said conduction layers (4), forms a web block (7) as shown in figures 2-8. In this embodiment, insulation layer (3) of the web block (7) may be a two sided circuit board. Connection lines (8) of said conduction layers (4) may be formed on said insulation layer (3) through printing and connection lines (8) of different conduction layers (4) are connected by said connection elements (5). In other words, said web block (7) may be in the form of double side copper plated glass epoxy panel or two conductive copper layers laminated with prepregs. Therefore, production of the web blocks (7) becomes easier.

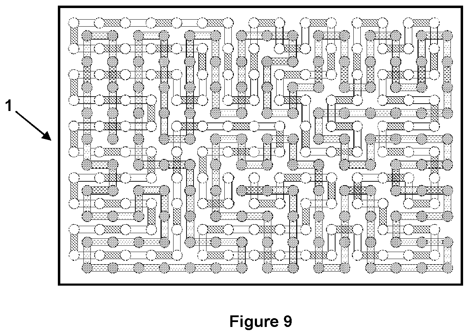

In another preferred embodiment of the present application, electrical net (1) comprises at least two web blocks (7). In this embodiment, said electrical net (1) comprises at least one insulation layer (3) between different web blocks and at least one (preferably two) connection element (5) that connects conduction layers (4) of different web blocks (7) through the connection lines (8). As shown in figure 9, when only two web blocks (7) are used, x-ray image of the formed net cannot be followed. When more than two web blocks (7) are used, it would be impossible to track the formed net and safety of the protection system (S) can be guaranteed.

Each web block (7) has a regular grid formed by the connection elements (5). Horizontal and vertical connection lines (8) are placed according to this grid, so as to connect two connection elements (5). Grid size depends on the precision of the manufacturing technology. Manufacturing technology also defines the connection line (8) width and the spacing between the connection lines (8).

In another preferred embodiment of the present application, at least two horizontal connection lines (8) of different conduction layers (4) are parallel to each other (on the horizontal plane). Similarly, in another preferred embodiment, at least two vertical connection lines (8) of different conduction layers (4) are parallel to each other (on the vertical plane). Therefore, when an x-ray imaging is used, horizontal and vertical connection lines (8)of different layers are not able to be distinguished. In a further preferred embodiment, connection lines (8) of different conduction layers (4) are parallel to each other with an offset (in other words, as shown in figure 9, connection elements (5) of different web blocks (7) do not intersect). In this embodiment, three dimensional net formed by conduction layers (4) and connection elements (5) cannot be tracked by x-ray imaging as well.

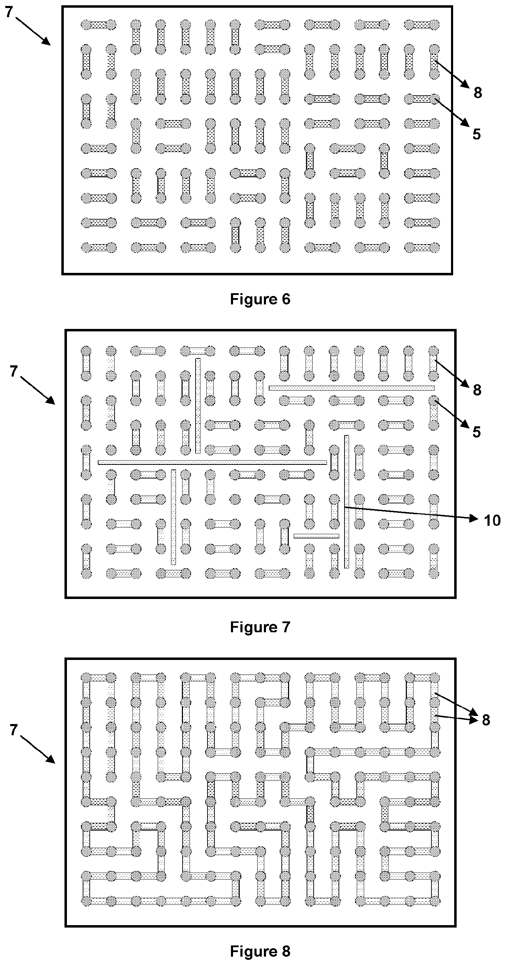

In another preferred embodiment of the present application, the conduction layers (4) comprise dummy connection lines (10) (Figure 7) that are not connected to any other connection lines (8). Thanks to said dummy connection lines (10), patterns of the conduction layers (4) become more complicated. Therefore, patterns of the conduction layers (4) are not able to be tracked by eye or x-ray imaging.

In another preferred embodiment of the present application, the connection elements (5) are loosely connected to the conduction layers (4). Therefore, when intruder tries to split the insulation layers (3), connection elements (5) easily disconnected from the conduction layers (4). Therefore, said split situation is able to be detected.

In another preferred embodiment, the protection system (S) comprises at least two electrical nets (1). Said electrical nets (1) may be connected in series or in parallel to each other. Preferably, electrical nets (1) are connected in series in order to increase the electrical resistance of the protection system (S).

According to the present application, since a three dimensional net, having an arbitrary shape, is formed by the connection lines (8) of conduction layers (4) and the connection elements (5), said net cannot be tracked by eye or x-ray imaging. Therefore, it is not possible to penetrate or split the insulation layers (3) without damaging conduction layers (4) and/or connection elements (5).

## Claims

1. A protection system (S) for detecting physical penetration, comprising at least one electrical net (1) and at least one detection circuit (2) that is connected to the electrical net (1), where in that said electrical net (1) comprises;
- at least two neighbouring conduction layers (4), each having horizontal and vertical connection lines (8) that are electrically conductive, wherein said detection circuit (2) that measures changing resistance of the three dimensional net (1) and therefore able to detect penetration when one of connection lines (8) of a conduction layers (4) and/or a connection element (5) is damaged during a penetration situation, is connected to at least two connection lines (8) of said conduction layers (4) through their tips (9);
- at least one insulation layer (3) that is located between said conduction layers (4), wherein said insulation layer (3) is dielectric and light proof; and
- at least three connection elements (5) that electrically connect said conduction layers (4) through said horizontal and vertical connection lines (8) of different conduction layers (4); wherein,
- the two neighbouring conducting layers (4) and the at least one insulation layer (3) form a web block (7);
- the web block (7) has a regular grid formed by connection elements (5);
- the horizontal and vertical connection lines (8) are placed according to said grid, so as to connect two adjacent connection elements (5); and
- each connection element (5) is directly connected to only one other connection element (5) in each conduction layer (4).

2. A protection system (S) according to claim 1, **characterized in that**; patterns formed by said horizontal and/or vertical connection lines (8) on each different conduction layer (4) are different from each other.

3. A protection system (S) according to claim 1, **characterized by** comprising; at least one protection layer (6).

4. A protection system (S) according to claim 3, **characterized in that**; said protection layer (6) is light proof.

5. A protection system (S) according to claim 1, **characterized in that**; at least two horizontal connection lines (8) of different conduction layers (4) are parallel to each other.

6. A protection system (S) according to claim 1, **characterized in that**; at least two vertical connection lines (8) of different conduction layers (4) are parallel to each other.

7. A protection system (S) according to claim 1, **characterized in that**; conduction layers (4) comprise dummy connection lines (10) that are not connected to any other connection lines (8).

8. A protection system (S) according to claim 1, **characterized in that**; connection elements (5) are loosely connected to the conduction layers (4).

9. A protection system (S) according to claim 1, **characterized by** comprising; at least two electrical nets (1).

10. A protection system (S) according to claim 9, **characterized in that**; said electrical nets (1) are connected in series.

11. A protection system (S) according to claim 9, **characterized in that**; said electrical nets (1) are connected in parallel.

12. A protection system (S) according to claim 1, **characterized in that**; said electrical net (1) comprises at least one web block formed by two neighbouring conduction layers (4) and one insulation layer (3), which is located between said conduction layers (4).

13. A protection system (S) according to claim 12, **characterized in that**; said web block (7) is in the form of copper and dielectric layers of laminated printed circuit board.

## Patentansprüche

1. Schutzsystem (S) zur Erkennung physischer Penetration, umfassend mindestens ein elektrisches Netz (1) und mindestens eine Erkennungsschaltung (2), die mit dem elektrischen Netz (1) verbunden ist, wobei das elektrische Netz (1) folgendes umfasst:
- mindestens zwei benachbarte Leitungsschichten (4), die jeweils horizontale und vertikale Verbindungsleitungen (8) aufweisen, die elektrisch leitfähig sind, wobei die Erkennungsschaltung (2), die den sich ändernden Widerstand des dreidimensionalen Netzes (1) misst und dadurch eine Penetration erkennen kann, wenn eine der Verbindungsleitungen (8) einer Leitungsschicht (4) und/oder ein Verbindungselement (5) während einer Penetrationssituation beschädigt wird, mit mindestens zwei Verbindungsleitungen (8) der Leitungsschichten (4) über deren Spitzen (9) verbunden ist;
- mindestens eine Isolierungsschicht (3), die sich zwischen den Leitungsschichten (4) befindet, wobei die Isolierungsschicht (3) dielektrisch und lichtundurchlässig ist; und
- mindestens drei Verbindungselemente (5), welche die Leitungsschichten (4) über die horizontalen und vertikalen Verbindungsleitungen (8) verschiedener Leitungsschichten (4) elektrisch verbinden; wobei
- die zwei benachbarten Leitungsschichten (4) und die mindestens eine Isolierungsschicht (3) einen Netzblock (7) bilden;
- wobei der Netzblock (7) ein durch die Verbindungselemente (5) gebildetes gleichmäßiges Gitter aufweist;
- wobei die horizontalen und vertikalen Verbindungsleitungen (8) gemäß dem Gitter platziert sind, um zwei benachbarte Verbindungselemente (5) zu verbinden; und
- wobei jedes Verbindungselement (5) mit einem anderen Verbindungselement (5) in jeder Leitungsschicht (4) direkt verbunden ist.

2. Schutzsystem (S) nach Anspruch 1, **dadurch gekennzeichnet, dass** sich durch die horizontalen und/oder vertikalen Verbindungsleitungen (8) auf jeder unterschiedlichen Leitungsschicht (4) gebildete Muster voneinander unterscheiden.

3. Schutzsystem (S) nach Anspruch 1, **dadurch gekennzeichnet, dass** es mindestens eine Schutzschicht (6) umfasst.

4. Schutzsystem (S) nach Anspruch 3, **dadurch gekennzeichnet, dass** die Schutzschicht (6) lichtundurchlässig ist.

5. Schutzsystem (S) nach Anspruch 1, **dadurch gekennzeichnet, dass** mindestens zwei horizontale Verbindungsleitungen (8) unterschiedlicher Leitungsschichten (4) parallel zueinander sind.

6. Schutzsystem (S) nach Anspruch 1, **dadurch gekennzeichnet, dass** mindestens zwei vertikale Verbindungsleitungen (8) unterschiedlicher Leitungsschichten (4) parallel zueinander sind.

7. Schutzsystem (S) nach Anspruch 1, **dadurch gekennzeichnet, dass** die Leitungsschichten (4) Blindverbindungsleitungen (10) umfassen, die mit keinen anderen Verbindungsleitungen (8) verbunden sind.

8. Schutzsystem (S) nach Anspruch 1, **dadurch gekennzeichnet, dass** die Verbindungselemente (5) lose mit den Leitungsschichten (4) verbunden sind.

9. Schutzsystem (S) nach Anspruch 1, **dadurch gekennzeichnet, dass** es mindestens zwei elektrische Netze (1) umfasst.

10. Schutzsystem (S) nach Anspruch 9, **dadurch gekennzeichnet, dass** die elektrischen Netze (1) in Reihe verbunden sind.

11. Schutzsystem (S) nach Anspruch 9, **dadurch gekennzeichnet, dass** die elektrischen Netze (1) parallel verbunden sind.

12. Schutzsystem (S) nach Anspruch 1, **dadurch gekennzeichnet, dass** das elektrische Netz (1) mindestens einen Netzblock umfasst, der durch zwei benachbarte Leitungsschichten (4) und eine Isolierungsschicht (3) gebildet wird, die sich zwischen den Leitungsschichten (4) befindet.

13. Schutzsystem (S) nach Anspruch 12, **dadurch gekennzeichnet, dass** der Netzblock (7) in Form von Kupfer- und dielektrischen Schichten einer laminierten gedruckten Leiterplatte gegeben ist.

## Revendications

1. Système de protection (S) pour détecter une pénétration physique, comprenant au moins un réseau électrique (1) et au moins un circuit de détection (2) qui est connecté au réseau électrique (1), ledit réseau électrique (1) comprenant ;
- au moins deux couches de conduction (4) voisines, chacune ayant des lignes de connexion (8) horizontales et verticales qui sont électriquement conductrices, ledit circuit de détection (2) qui mesure la résistance changeante du réseau tridimensionnel (1) et donc capable de détecter la pénétration lorsque l'une des lignes de connexion (8) d'une couche de conduction (4) et/ou un élément de connexion (5) est endommagé pendant une situation de pénétration, étant connecté à au moins deux lignes de connexion (8) desdites couches de conduction (4) par leurs pointes (9) ;
- au moins une couche d'isolation (3) qui est située entre lesdites couches de conduction (4), ladite couche d'isolation (3) étant diélectrique et étanche à la lumière ; et
- au moins trois éléments de connexion (5) qui relient électriquement lesdites couches de conduction (4) par l'intermédiaire desdites lignes de connexion (8) horizontales et verticales de différentes couches de conduction (4) ;
- les deux couches de conduction (4) voisines et l'au moins une couche d'isolation (3) formant un bloc à âme (7) ;
- le bloc à âme (7) ayant une grille régulière formée par des éléments de connexion (5) ;
- les lignes de connexion (8) horizontales et verticales étant placées selon ladite grille, de sorte à connecter deux éléments de connexion (5) adjacents ; et
- chaque élément de connexion (5) étant directement connecté à un seul autre élément de connexion (5) dans chaque couche de conduction (4).

2. Système de protection (S) selon la revendication 1, **caractérisé en ce que** les motifs formés par lesdites lignes de connexion (8) horizontales et/ou verticales sur chaque couche de conduction (4) différente sont différents les uns des autres.

3. Système de protection (S) selon la revendication 1, **caractérisé en ce qu'**il comprend au moins une couche de protection (6).

4. Système de protection (S) selon la revendication 3, **caractérisé en ce que** ladite couche de protection (6) est étanche à la lumière.

5. Système de protection (S) selon la revendication 1, **caractérisé en ce qu'**au moins deux lignes de connexion (8) horizontales de différentes couches de conduction (4) sont parallèles l'une à l'autre.

6. Système de protection (S) selon la revendication 1, **caractérisé en ce qu'**au moins deux lignes de connexion (8) verticales de différentes couches de conduction (4) sont parallèles l'une à l'autre.

7. Système de protection (S) selon la revendication 1, **caractérisé en ce que** les couches de conduction (4) comprennent des lignes de connexion factices (10) qui ne sont pas connectées à d'autres lignes de connexion (8).

8. Système de protection (S) selon la revendication 1, **caractérisé en ce que** les éléments de connexion (5) sont reliés de manière lâche aux couches de conduction (4).

9. Système de protection (S) selon la revendication 1, **caractérisé en ce qu'**il comprend au moins deux réseaux électriques (1).

10. Système de protection (S) selon la revendication 9, **caractérisé en ce que** lesdits réseaux électriques (1) sont connectés en série.

11. Système de protection (S) selon la revendication 9, **caractérisé en ce que** lesdits réseaux électriques (1) sont connectés en parallèle.

12. Système de protection (S) selon la revendication 1, **caractérisé en ce que** ledit réseau électrique (1) comprend au moins un bloc d'âme formé par deux couches de conduction (4) voisines et une couche d'isolation (3), qui est située entre lesdites couches de conduction (4).

13. Système de protection (S) selon la revendication 12, **caractérisé en ce que** ledit bloc d'âme (7) est sous la forme de couches de cuivre et diélectriques d'une carte de circuit imprimé stratifiée.
